# EUROPÄISCHE PATENTSCHRIFT

(11) **EP 0 541 581 B1**
(45) Veröffentlichungstag und Bekanntmachung des Hinweises auf die Patenterteilung: **24.01.1996**
(21) Anmeldenummer: 91912728.2
(22) Anmeldetag: 10.07.1991
(51) Int. Cl.: H01S 3/098

(54) **EINZELMODE-LASER**
SINGLE-MODE LASER
LASER A MODE UNIQUE

(30) Priorität: 11.10.1990 DE 4032323
(43) Veröffentlichungstag der Anmeldung: 19.05.1993
(73) Patentinhaber: ADLAS GMBH & CO. KG, D-23569 Lübeck (DE)
(72) Erfinder: WEDEKIND, Dörte, D-2400 Lübeck (DE); LAWRENZ-STOLZ, Jörg, D-2400 Lübeck (DE)
(74) Vertreter: Klunker . Schmitt-Nilson . Hirsch
(86) Internationale Anmeldenummer: EP9101296
(87) Internationale Veröffentlichungsnummer: WO9207400

(56) Entgegenhaltungen:
- EP-A- 0 331 303
- WO-A-90/15460
- FR-A- 2 431 140
- GB-A- 2 222 907
- US-A- 4 617 666
- W. Demtröder "Laser-Spectroscopy", Springer Series in Chemical Physics; vol. 5, Second Corrected Printing, 1982, Springer-Verlag, Berlin, Seiten 178-182, 347-350 und 358-364
- W. Koechner "Solid-State Laser Engineering", Springer Series in Optical Sciences, herausgegeben von D.L. MacAdam, 1976, Springer-Verlag, Berlin, Seiten 516-519

## Beschreibung

Die Erfindung betrifft einen Einzelmode-Laser, insbesondere in Form eines diodengepumpten Festkörperlasers, gemäß dem Oberbegriff des Anspruchs 1. Ein solcher laser ist aus GB-A-2 222 907 bekannt.

Um bei einem Laser einen Einzelmode-Betrieb zu erhalten, also einen Betrieb, bei dem lediglich der Transversal-Grundmode und ein Longitudinalmode entsprechend der Wellenlänge des aktiven Lasermediums anschwingen, muß der Resonator bestimmte Kriterien erfüllen. Zur Beschränkung der Transversal-Moden auf den Grundmode kann man Modenblenden einsetzen, oder eine Anpassung des Volumens des Pumplichtes an das Volumen des Grundmode des Resonators vornehmen.

Der Erfindung liegt die Aufgabe zugrunde, einen Laser anzugeben, der sich durch einen besonders stabilen Einzelmode-Betrieb auszeichnet.

Diese Aufgabe wird bei einem Einzelmode-Laser, insbesondere in Form eines diodengepumpten Festkörperlasers gelöst, der folgende Merkmale aufweist:
- eine Pumplichtquelle
- einen Resonator, mit einem ersten Spiegel,
- einem Lasermedium,
- einem Polarisator,
- einem Kristall, und
- einem zweiten, als Auskoppelspiegel dienenden Spiegel,
dadurch gekennzeichnet, daß der Kristall als doppelbrechender Kristall mit seinen optischen Achsen in einem Winkel von 45° bezüglich der durch den Polarisator bewirkten Polarisationsrichtung derart angeordnet ist, daß die Verluste für den ordentlichen und den außerordentlichen Strahl etwa gleichgroß sind und daß der zweite Spiegel als Planspiegel oder als Spiegel mit großem Krümmungsradius ausgebildet ist.

Durch den doppelbrechenden Kristall wird das Licht elliptisch polarisiert, und der Polarisator ermöglicht den verlustfreien Durchtritt lediglich des Lichts mit der "richtigen" Polarisationsrichtung.

Durch diese Ausgestaltung des Resonators des Lasers ergibt sich ein Lyotfilter. Das Laserlicht durchläuft den Resonator mehrmals, bevor es den Resonator über den Auskoppelspiegel verläßt. Da das Licht mithin das Lyotfilter mehrfach durchläuft, erhält man ein sehr schmalbandiges Filter, wodurch ein Einzelmoden-Betrieb des Lasers möglich ist, wenn der freie Spektralbereich des Resonators hinreichend groß ist.

Das durch die erfindungsgemäße Maßnahmen gebildete Lyotfilter besitzt Trahsmissionsmaxima, die von der Brechungsindexdifferenz des Kristalls, der Wellenlänge und der Länge des Kristalls abhängen. Das Produkt aus Brechungsindexdifferenz und Kristallänge muß an die Verstärkuhgskurve der Laserwellenlänge angepaßt werden. Typischerweise gibt ein 5-mm-KTP-Kristall mit einem Schnittwinkel von θ∼ 26 µ einen freien Spektralbereich von δν = 3.2 x 10¹¹Hz, der deutlich über der Halbwertsbreite der Verstärkungskurve von Nd-YAG von Δν = 1.6 x 10¹¹Hz liegt.

Der freie Spektralbereich des Lyotfilters muß größer sein als die Halbwertsbreite der Verstärkungskurve, da sonst zwei Longitudinalmoden anschwingen können.

Erfindungsgemäß wird dafür gesorgt, daß für den außerordentlichen Strahl keine anderen Verluste auftreten als für den ordentlichen Strahl. Dies erreicht man dadurch, daß der zweite Spiegel als Planspiegel oder als Spiegel mit sehr großem Krümmungsradius ausgebildet ist, wobei der doppelbrechende Kristall sich zwischen dem als Brewsterfenster ausgebildeten Polarisator und dem Auskoppelspiegel befindet.

Vorzugsweise erfolgt mit Hilfe einer Linse eine Anpassung des Pumplichts an den Grundmode TEM₀₀.

Wie oben erwähnt, spielen beim Einzelmode-Betrieb die Brechungsindices, ebenso wie die Länge des Kristalls eine besondere Rolle bei der Festlegung der Wellenlänge des Lasers bzw. der Laser-Frequenz. Da nun sowohl die Brechungsindices als auch die Länge des Kristalls temperaturabhängig sind, ist die exakte. Laserfrequenz abhängig von der Temperatur des Kristalls.

Demgemäß sieht die Erfindung vor, daß eine Temperatursteuerung vorgesehen ist, die die Temperatur des Resonators, insbesodere des Kristalls, auf einem konstanten Wert hält. Vorzugsweise ist für die Konstanthaltung der Temperatur eine thermoelektrische Kühlvorrichtung vorgesehen. Wird die Temperatur in engen Grenzen konstant gehalten, bleiben sowohl die Brechungsindices als auch die Länge des Kristalls konstant, und man erreicht einen stabilen Einzelmode-Betrieb. Speziell wird für den Einzelmode-Betrieb des Lasers ein Auskoppelspiegel gewählt, despen Reflexionsgrad zwischen 85 % und 98 % liegt, wobei im Hinblick auf höhere Leistungen eine Senkung des Reflexionsgrades angestrebt wird. Man kann den Kristall mit seinen optischen Achsen zusätzlich derart ausbilden und innerhalb des Resonators anordnen, daß ein frequenzverdoppelter Laser erhalten wird.

Im folgenden wird ein Ausführungsbeispiel der Erfindung anhand der Zeichnung näher erläutert. Es zeigen:
- Fig. 1: eine auseinandergezogene, perspektivische Darstellung eines Einzelmode-Lasers,
- Fig. 2A und 2B: den Frequenzgang eines Lasers zur Veranschaulichung der Lage des Lyot-Filters im Spektrum bei verschiedenen Kristalltemperaturen, und
- Fig. 2C: den Frequenzgang ähnlich wie die Fig. 2A und 2B, jedoch für einen demgegenüber doppelt so langen Kristall.

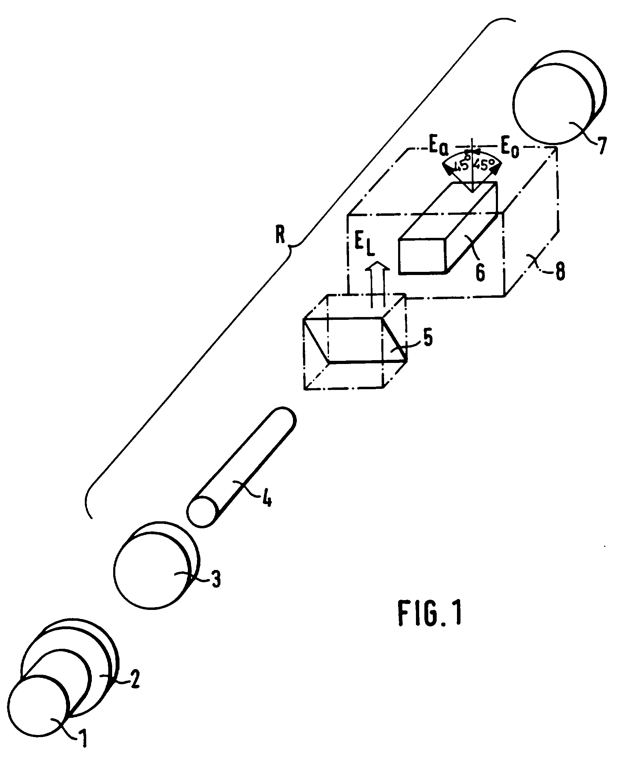

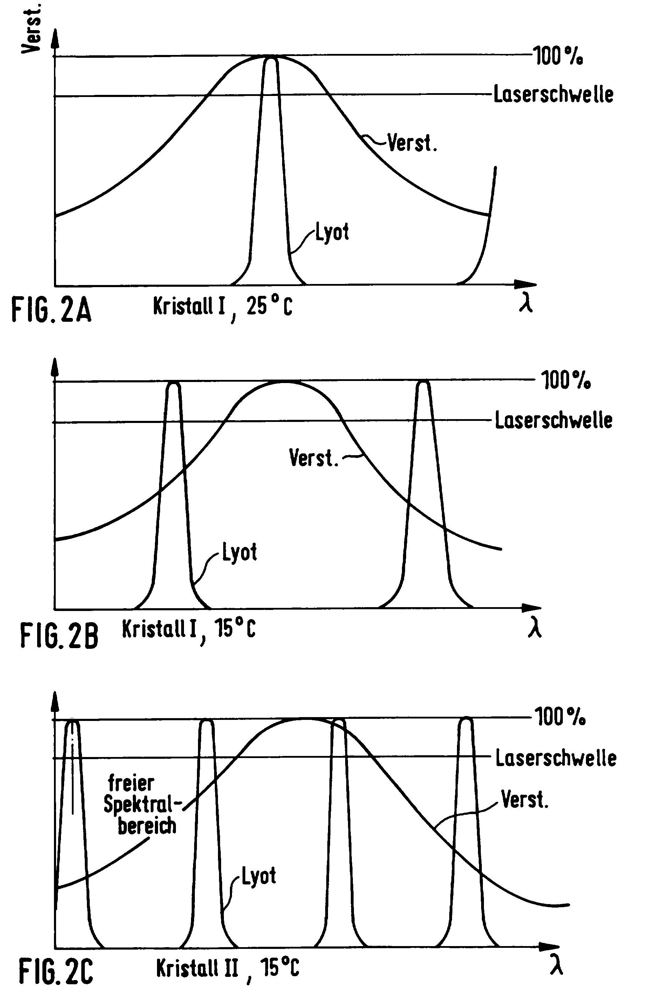

Bevor auf Fig. 1 und eine spezielle Ausführungsform der Erfindung eingegangen wird, soll anhand der Fig. 2 kurz auf die Randbedingungen für den Betrieb eines Einzelmode-Lasers eingegangen werden.

In Fig. 2A sind die Verstärkungskurve eines Laserkristalls und relativ dazu die Lage des Lyot-Filters veranschaulicht. Die Temperatur des Kristalls I einer bestimmten Länge beträgt hier 25°C. Wie man sieht, ist die Linienbreite des Lyot-Filters im Laser sehr klein. Oberhalb der Laserschwelle ist die Verstärkungskurve relativ breit, und aufgrund des relativ großen freien Spektralbereiches des Lyot-Filters befindet sich oberhalb der Laserschwelle innerhalb der Verstärkungskurve nur eine Lyot-Filterlinie.

Fig. 2A erfüllt die Voraussetzungen für den Einzelmode-Betrieb:
a) Der freie Spektralbereich des Lyot-Filters ist größer als die Verstärkungskurve oberhalb der Laserschwelle, und
b) die Linienbreite des Lyot-Filters ist so klein, daß oberhalb der Laserschwelle nur eine Longitudinalmode des Resonators abgedeckt wird.

Während man die Bedingung a) durch geeignete Wahl der Länge und der Brechungsindices des doppelbrechenden Kristalls erfüllt werden kann, wird die Bedingung b) bei einem relativ kurzen Resonator erfüllt, der einen großen freien Spektralbereich aufweist. Ein Beispiel dafür sind mit Dioden gepumpte Festkörperlaser.

Wie aus einem Vergleich der Fig. 2A und 2B hervorgeht, läßt sich durch entsprechende Temperatursteuerung des Kristalls erreichen, daß das Lyot-Filter für solche Moden transmittierend wird, die oberhalb der Laserschwelle liegen, so daß es zum Einzelmode-Betrieb kommen kann, wenn die oben genannten Voraussetzungen erfüllt sind.

Eine Pumplichtquelle 1 mit einer Diodenanordnung gibt Pumplicht durch eine Linse 2 auf die Außenseite eines Einkoppelspiegels 3. Die Linse 2 dient zur Anpassung des Pumpvolumens an das TEM₀₀-Volumen des Resonators.

In der Zeichnung ist dieser Resonator insgesamt mit R bezeichnet. Sein Einkoppelspiegel 3 besitzt auf der dem Innenraum des Resonators zugewandten Seite eine Spiegelfläche mit relativ kleinem Krümmungsradius.

Hinter der Spiegelfläche des Einkoppelspiegels 3 befindet sich als aktives Lasermedium ein YAG-Element 4. Daran schließt sich ein Polarisator 5 an, der hier als Polarisator und gleichzeitig als Analysator fungiert. Dann folgt ein doppelbrechender Kristall 6. Wenn, wie in der Zeichnung durch einen Vektor E_{L} angedeutet ist, die Polarisationsrichtung des Laserlichts vertikal orientiert ist, so bilden diesbezüglich die optischen Achsen (Eₐ, Eₒ) für den außerordentlichen bzw. den ordentlichen Strahl einen Winkel von jeweils 45°.

Statt separater Spiegel können diese auch in Form einer speziellen Oberflächenbedampfung am aktiven Medium und/ oder doppelbrechenden Kristall angebracht sein. Statt eines separaten Polarisators können auch die in den Resonator weisenden Flächen des aktiven Mediums und/oder des doppelbrechenden Kristalls unter dem Brewsterwinkel stehen.

Am unteren Ende des Resonators R befindet sich ein Auskoppelspiegel 7, dessen dem Kristall 6 zugewandte Spiegelfläche einen Reflexionsgrad von 95 % aufweist.

Um einen stabilen Einzelmode-Laserbetrieb zu erreichen, ist der doppelbrechende Kristall 6 mit einer eine thermoelektrische Kühlvorrichtung 8 aufweisenden Temperaturregelung vorgesehen, die dafür sorgt, daß der Kristall eine einstellbare konstante Temperatur hat. Dadurch wird erreicht, daß sowohl die Brechungsindices als auch die Länge des Kristalls stets konstant sind.

Weiterhin kann man den Kristall 6 mit seinen optischen Achsen derart ausbilden und innerhalb des Resonators anordnen, daß eine Frequenzverdoppelung stattfindet. Mit einem solchen frequenzverdoppelten Laser läßt sich dann, wenn als laseraktives Material Neodym in einem bekannten Laserkristall oder -glas benutzt wird (z. B. Nd:YAG, Nd:YLF, Nd:GGG, Nd:Glas, etc.) und eine Fundamentalwellenlänge von 1.0 bis 1.1 µm erzeugt wird, insbesondere grünes Laserlicht erzeugen.

## Patentansprüche

1. Einzelmode-Laser, insbesondere in Form eines diodengepumpten Festkörperlasers, umfassend folgende Merkmale:
- eine Pumplichtquelle
- einen Resonator mit einem ersten Spiegel (3),
- einem Lasermedium (4),
- einem Polarisator (5),
- einem Kristall (6) und
- einem zweiten, als Auskoppelspieqel dienenden Spiegel (7),
dadurch gekennzeichnet, daß der Kristall (6) als doppelbrechender Kristall mit seinen optischen Achsen in einem Winkel von 45° bezüglich der durch den Polarisator bewirkten Polarisationsrichtung (E₂) derart angeordnet ist, daß die Verluste für den ordentlichen und den außerordentlichen Strahl etwa gleich groß sind und daß der zweite Spiegel als Planspiegel oder als Spiegel mit großem Krümmungsradius ausgebildet ist.

2. Einzelmode-Laser nach Anspruch 1,
dadurch **gekennzeichnet**, daß
der Polarisator durch eine optische Fläche, die unter dem Brewsterwinkel steht, gebildet wird.

3. Einzelmode-Laser nach den Ansprüchen 1 und 2,
dadurch **gekennzeichnet,**
daß der Pumplichtquelle eine Linse (2) zur Anpassung an den Grundmode (TEM₀₀) zugeordnet ist.

4. Einzelmode-Laser nach den Ansprüchen 1 bis 3,
dadurch **gekennzeichnet**,
daß eine Temperatursteuerung vorgesehen ist, die die Temperatur des Resonators, insbesondere des Kristalls (6) auf einen konstanten Wert hält.

5. Einzelmode-Laser nach Anspruch 4,
dadurch **gekennzeichnet**,
daß die Temperatursteuerung einen thermoelektrischen Kühler aufweist.

6. Einzelmode-Laser nach einem der Ansprüche 1 bis 5,
dadurch **gekennzeichnet**,
daß der zweite Spiegel einen Reflexionsgrad zwischen 85 % bis 98 % aufweist.

## Claims

1. A single-mode laser, in particular in the form of a diode-pumped solid state laser, having the following features:
- a pumped light source,
- a resonator having a first mirror (3),
- a laser medium (4),
- a polarizer (5),
- a crystal (6), and
- a second mirror (7) serving as an output mirror,
characterized in that the crystal (6) is disposed as a birefringent crystal with its optical axes at an angle of 45° to the polarizing direction (E₂) produced by the polarizer, in such a way that the losses are substantially equal for the ordinary and extraordinary rays, and the second mirror is designed as a plane mirror or as a mirror with a very large radius of curvature.

2. The single-mode laser of claim 1, characterized in that the polarizer is formed by an optical surface which is at the Brewster angle.

3. The single-mode laser of claims 1 and 2, characterized in that a lens (2) is associated with the pumped light source for adaptation to the basic mode (TEM₀₀).

4. The single-mode laser of claims 1 to 3, characterized in that a temperature control means is provided for keeping the temperature of the resonator, in particular the crystal (6), at a constant value.

5. The single-mode laser of claim 4, characterized in that the temperature control means has a thermoelectric cooler.

6. The single-mode laser of any of claims 1 to 5, characterized in that the second mirror has a degree of reflection between 85% and 98%.

## Revendications

1. Laser monomode, en particulier sous la forme d'un laser à solide pompé par diodes, présentant les caractéristiques suivantes :
- une source de lumière de pompage,
- une cavité résonnante avec un premier miroir (3),
- un milieu laser (4),
- un polariseur (5),
- un cristal (6), et
- un deuxième miroir (7) servant de miroir de découplage,
caractérisé par le fait que le cristal (6), qui se présente sous la forme d'un cristal biréfringent, dont les axes optiques forment un angle de 45° avec la direction de polarisation (E₂) définie par le polariseur, est disposé de sorte que les pertes pour le rayon ordinaire et le rayon extraordinaire sont sensiblement égales, et que le deuxième miroir est réalisé sous forme de miroir plan ou de miroir présentant un rayon de courbure important.

2. Laser monomode selon la revendication 1,
**caractérisé** par le fait
que le polariseur est formé par une surface optique qui présente un angle d'incidence de Brewster.

3. Laser monomode selon les revendications 1 et 2,
**caractérisé** par le fait
qu'il est associé à la source de lumière de pompage une lentille (2) pour une adaptation au mode fondamental (TEM₀₀).

4. Laser monomode selon les revendications 1 à 3,
**caractérisé** par le fait
qu'il est prévu un système de commande de température qui maintient la température de la cavité résonnante, en particulier du cristal (6), à une valeur constante.

5. Laser monomode selon la revendication 4,
**caractérisé** par le fait
que le système de commande de température comporte un dispositif de refroidissement thermoélectrique.

6. Laser monomode selon l'une des revendications 1 à 5,
**caractérisé** par le fait
que le deuxième miroir présente un degré de réflexion compris entre 85 et 98%.
